# EUROPÄISCHE PATENTSCHRIFT

(11) **EP 3 401 197 B1**
(45) Veröffentlichungstag und Bekanntmachung des Hinweises auf die Patenterteilung: **27.11.2019**
(21) Anmeldenummer: 17170656.7
(22) Anmeldetag: 11.05.2017
(51) Int. Cl.: B62J 27/00, B62J 1/28

(54) **AIRBAGSYSTEM FÜR EIN AUFSITZKRAFTFAHRZEUG UND VERFAHREN ZUM NACHRÜSTEN EINES AUFSITZKRAFTFAHRZEUGS**
AIRBAG SYSTEM FOR A RIDE-ON MOTOR VEHICLE AND METHOD FOR RETROFITTING A RIDE-ON MOTOR VEHICLE
SYSTÈME DE COUSSIN GONFLABLE DE SÉCURITÉ POUR VÉHICULE AUTOPORTÉ ET PROCÉDÉ DE POST-ÉQUIPEMENT D'UN VÉHICULE AUTOPORTÉ

(43) Veröffentlichungstag der Anmeldung: 14.11.2018
(73) Patentinhaber: Küster, Dirk, 8121 Benglen (CH)
(72) Erfinder: Küster, Dirk, 8121 Benglen (CH)
(74) Vertreter: Schaad, Balass, Menzl & Partner AG

(56) Entgegenhaltungen:
- EP-A2- 1 354 791
- DE-A1- 4 013 809
- FR-A1- 3 041 320

## Beschreibung

Die Erfindung betrifft ein Airbagsystem für ein Aufsitzkraftfahrzeug sowie ein Aufsitzkraftfahrzeug mit einem derartigen Airbagsystem gemäss dem Oberbegriff des Anspruchs 1 bzw. gemäss Anspruch 12, und ein Verfahren zum Nachrüsten eines Aufsitzkraftfahrzeugs gemäss dem Oberbegriff des Anspruchs 13. Das Airbagsystem dient dem Dämpfen des Aufpralls eines Fahrers bei einer Kollision mit einem Hindernis.

Eine Airbag-Vorrichtung ist zum Beispiel aus dem Dokument DE 197 20 622 A1 bekannt. Diese Airbag-Vorrichtung ist in der Lage, einen Fahrer bei einer Kollision mit einem Hindernis durch die Expansion eines an einem Körper des Fahrzeugs vorgesehenen Airbags zurückzuhalten und den Fahrer zu schützen. Der Airbag umfasst einen vorderen Sackabschnitt, welcher bei einer Expansion des Airbags gegenüberliegend der Vorderseite des Fahrers zu liegen kommt, und rechte und linke Seitensackabschnitte, welche sich von der rechten und der linken Seite des vorderen Sackabschnitts integral nach hinten erstrecken und welche bei einer Expansion des Airbags gegenüberliegend der rechten und der linken Seite des Fahrers zu liegen kommen. Bei einer Expansion des Airbags legt sich der Airbag um den Körper des Fahrers herum. Der Airbag ist an einem in einer Ausnehmung im Bereich des Kraftstofftanks angeordneten Verschiebrahmen befestigt. Wenn der bei einem Unfall des Fahrzeugs erzeugte Stoss sehr gross ist, bewegt sich der Verschieberahmen von der Ausnehmung weg und der Fahrer verlässt das Fahrzeug, während er durch den Airbag gehalten ist.

Aus dem Dokument DE 197 20 622 A1 ist ebenfalls bekannt, eine Oberfläche des Airbags, welche dem Fahrer gegenüberliegend zu liegen kommt, mit einem Haftmittel zu versehen, um das Anhaften an der Kleidung des Fahrers zu verbessern.

Im Falle einer Kollision des Fahrzeugs mit einem Hindernis ist zwar der Fahrer mit einer solchen Airbag-Vorrichtung auf der Vorderseite und auf den Flanken geschützt, jedoch nicht im Rückenbereich. Ferner wird der Fahrer einer unfallbedingten Flugbahn folgen und möglicherweise auf das Hindernis aufprallen. Dies führt zu einem hohen Verletzungsrisiko.

Aus dem Dokument DE 38 01 462 C1 ist eine Sicherheitsvorrichtung an Motorrädern bekannt, wobei bei der Kollision mit einem Hindernis ein zwischen dem Fahrzeugsitz und Fahrzeugrahmen angeordneten Airbag unter hohem Druck aufgeblasen wird, sodass dieser den Fahrzeugsitz mit dem Motorradfahrer vertikal anhebt. Die Vertikalanhebung bewirkt, dass der Motorradfahrer in einem höheren Bogen über das Hindernis geschleudert wird. Ein Gestänge verhindert, dass sich der Fahrzeugsitz vom Fahrzeugrahmen vollständig ablöst. Dieser Sicherheitsvorrichtung liegt dem Gedanken zugrunde, die unfallbedingte Flugbahn des Motorradfahrers mit einem vergrößerten Winkel und aus einer höheren Ausgangsposition zu beginnen. Dadurch wird der Motorradfahrer über das Hindernis hinweggeschleudert. Diese Sicherheitsvorrichtung sieht jedoch weder einen Schutz der Vorderseite noch des Rückens des Motorradfahrers, was zu erheblichen Verletzungsrisiken führt, insbesondere weil der Fahrer zusätzlich zur Kollisionsgeschwindigkeit noch aus einer höheren Lage auf den Boden aufprallen wird.

Aus dem Dokument FR 3 041 320 A1 sind ein Airbagsystem gemäß dem Oberbegriff des Anspruchs 1, ein Aufsitzfahrzeug nach Anspruch 12 sowie ein Verfahren nach Anspruch 13 bekannt.

Aufgabe der vorliegenden Erfindung ist es somit, ein Airbagsystem für ein Aufsitzkraftfahrzeug, ein Aufsitzkraftfahrzeug mit einem derartigen Airbagsystem und ein Verfahren zum Nachrüsten eines Aufsitzkraftfahrzeugs zur Verfügung zu stellen, wobei das Verletzungsrisiko des Fahrers bei einer Kollision mit einem Hindernis verringert wird.

Diese Aufgabe wird erfindungsgemäss durch ein Airbagsystem gemäss Anspruch 1, ein Aufsitzkraftfahrzeug gemäss Anspruch 12, und ein Verfahren gemäss Anspruch 13 gelöst. Bevorzugte Ausführungsformen der Erfindung sind in den abhängigen Ansprüchen wiedergegeben.

In einem ersten Aspekt betrifft die vorliegende Erfindung ein Airbagsystem für ein einen Fahrzeugkörper aufweisendes Aufsitzkraftfahrzeug, umfassend einen Sitz, einen Airbag, welcher in seinem Ruhezustand in einem Airbagbehälter angeordnet ist, und einen Gasgenerator zum Erzeugen eines Hochdruckgases zum Aufblasen des Airbags.

Weiter umfasst das Airbagsystem ein Steuerungssystem, welches im Falle einer Kollision des Aufsitzkraftfahrzeugs mit einem Hindernis den Gasgenerator in Betrieb setzt, um den Airbag aufzublasen, wobei der Airbag im aufgeblasenen Zustand dazu bestimmt ist, eine Vorderseite und die Flanken eines Fahrers mindestens teilweise zu umhüllen und am Fahrer bei einem Sturz zu halten, um den Aufprall zu dämpfen.

Erfindungsgemäss weist der Sitz eine Sitzaufnahme, die dazu bestimmt ist, am Fahrzeugkörper befestigt zu sein, und einen an der Sitzaufnahme lösbar befestigten, den Airbagbehälter umfassenden Sitzteil auf. Die Sitzaufnahme kann mit bekannten Befestigungsmitteln am Fahrzeugkörper befestigt sein. Ferner weist der Sitz mindestens eine Schleudervorrichtung auf, welche vom Steuerungssystem bei der Kollision in Betrieb gesetzt wird und dazu bestimmt ist, den Sitzteil zusammen mit dem Fahrer von der Sitzaufnahme zu lösen.

Mit dem Begriff "Aufsitzkraftfahrzeug" ist ein Fahrzeug wie z.B. ein Motorrad, ein Moped oder einen Motorroller gemeint. Die Anwendung des erfindungsgemässen Airbagsystems auf ein motorradähnliches Fahrzeug mit drei oder vier Rädern, z.B. einem Quad, ist jedoch mit erfasst.

Mit dem Begriff "Fahrzeugkörper" ist das Aufsitzkraftfahrzeug ohne den konventionellen Sitz gemeint.

Airbags sind dem Fachmann bekannt, zum Beispiel aus dem Dokument DE 197 20 622 A1. Der Airbag ist grundsätzlich in der Form eines Sacks ausgebildet und weist eine Öffnung auf, an der der Gasgenerator in einem hermetisch abgedichteten Zustand befestigt ist. Der Ruhezustand des Airbags versteht sich als der gefaltete Zustand des unaufgeblasenen Airbags. Der Airbag und der Gasgenerator sind im Airbagbehälter angeordnet. Wenn der Gasgenerator in Betrieb gesetzt wird, erzeugt er ein Hochdruckgas und bläst den Airbag auf. Bei seiner Entfaltung stösst der Airbag einen Deckel des Airbagbehälters aus und gegebenenfalls zerreisst eine den Deckel abdeckende Auskleidung, vorzugsweise entlang eine Sollbruchlinie. Eine vorteilhafte Ausbildung des erfindungsgemässen Airbagsystems sieht vor, dass der Airbag dauernd mit dem Sitzteil verbunden ist. Vorzugsweise ist der Airbag durch eine Lasche mit dem Sitzteil, vorzugsweise mit dem Airbagbehälter, verbunden oder an den Sitzteil angenäht oder angeklebt. Da der Airbag im aufgeblasenen Zustand am Fahrer beim Sturz hält, wird sichergestellt, dass der Sitzteil in Kontakt mit dem Fahrer bleibt, um seine Schutzwirkung zu entfalten.

In einer bevorzugten Ausführungsform des erfindungsgemässen Airbagsystems umfasst das Airbagsystem ein Anschlussmittel, das dazu bestimmt ist, den Fahrer und den Sitzteil miteinander zu verbinden, wodurch der Sitzteil bei der Kollision eine Hinterseite des Fahrers mindestens teilweise abdeckt. Vorzugsweise umfasst das Anschlussmittel einen Gurt, die dazu bestimmt ist, vom Fahrer getragen zu werden, und eine Leine, welche dazu bestimmt ist, den Gurt mit dem Sitzteil, vorzugsweise in der, in Fahrtrichtung gesehen, hinteren Hälfte des Sitzteils, zu verbinden, wenn der Fahrer auf dem Aufsitzkraftfahrzeug sitzt. In vorteilhafter Weise verursacht eine Verwendung des Gurtes keine Beeinträchtigung des Fahrers in seinen Bewegungen während des Fahrens. Bevor der Fahrer losfährt, muss er lediglich den Gurt um sich schliessen und die Leine mit dem Sitzteil koppeln.

In einer bevorzugten Ausführungsform ist die Leine an einem Ende mit dem Gurt verbunden und weist am anderen Ende ein Kupplungsmittel zum Koppeln mit dem Sitzteil auf. Vorzugsweise kann das Kupplungsmittel so ausgebildet sein, dass eine Steckzunge mit der Leine unlösbar verbunden ist, welche in einen entsprechenden Aufnahmeschlitz des Sitzteils eingesteckt wird. Vorzugsweise kann das Kupplungsmittel mit dem Steuerungssystem verbunden sein, um den Kupplungszustand des Kupplungsmittels zu ermitteln und diesen bei der Steuerung des Airbagsystems zu berücksichtigen.

Besonders bevorzugt weist die Leine ein Spannungsmittel auf, das dazu bestimmt ist, die, in Fahrtrichtung gesehen, hintere Hälfte des Sitzteils in dem von der Sitzaufnahme gelösten Zustand des Sitzteils in Richtung der Hinterseite des Fahrers zu ziehen. Auf dieser Weise wird sichergestellt, dass der Sitzteil enger in Kontakt mit dem Fahrer beim Sturz bleibt, sodass der Schutz der Hinterseite des Fahrers verbessert wird. Gegebenenfalls kann der Sitzteil eine Sollbiegstelle aufweisen, sodass der Sitzteil sich um die Sollbiegstelle in Richtung der Hinterseite des Fahrers biegt und sich an die Form der Hinterseite des Fahrers anpasst. Auf dieser Weise wird sichergestellt, dass der Sitzteil den Schutz der Hinterseite des Fahrers weiter verbessert.

In einer bevorzugten Ausführungsform ist die mindestens eine Schleudervorrichtung unter dem Sitzteil angeordnet. Bei dieser Anordnung ist die Schleudervorrichtung geschützt platziert und kann eine optimale Wirkung entfalten. Die Schleudervorrichtung dient dazu, den Sitzteil von der Sitzaufnahme in die der Sitzaufnahme abgewandte Richtung wegzuschleudern, wenn sie in Betrieb gesetzt wird. Vorzugsweise ist die mindestens eine Schleudervorrichtung unter einem mittleren Bereich des Sitzteils angeordnet, wodurch der Sitzteil unter dem kombinierten Einfluss der von der Schleudervorrichtung ausgeübten Kraft und der Trägheitskraft nach vorne in Fahrtrichtung gesehen und in die Höhe geschleudert wird. Die Flugbahn des auf dem Sitzteil sitzenden Fahrers wird folglich beeinflusst und kontrolliert höher verlaufen, sodass ein Aufprall des Fahrers mit dem Hindernis vermieden und das Verletzungsrisiko des Fahrers verringert wird.

Bei einer Anordnung der Schleudervorrichtung unter einer, in Fahrtrichtung gesehen, hinteren Hälfte des Sitzteils, wird der Sitzteil zusätzlich, in Fahrtrichtung gesehen, nach vorne um seinen vorderen Endbereich schwenken.

In einer bevorzugten Ausführungsform ist die mindestens eine Schleudervorrichtung an der Sitzaufnahme befestigt, sodass sie über eine feste Abstützung bei ihrer Aktivierung verfügt und eine mechanische sowie elektrische Verbindung mit dem Fahrzeugkörper aufrechterhält.

Denkbar ist auch, die mindestens eine Schleudervorrichtung an einem Aufbaurahmen des Fahrzeugkörpers zu befestigen, wenn eine noch festere Abstützung benötigt wird. In diesem Fall kann die Schleudervorrichtung zuerst am Aufbaurahmen des Fahrzeugkörpers und in einem zweiten Schritt die Sitzaufnahme am Fahrzeugkörper befestigt werden, jedoch ist auch eine gleichzeitige Befestigung möglich.

Schleudervorrichtungen sind dem Fachmann bekannt. Eine mögliche Schleudervorrichtung umfasst einen Airbag, dessen blitzartigen Aufblasen eine Kraft auf die der Sitzaufnahme zugewandten Seite des Sitzteils ausübt und ihn zusammen mit dem Fahrer von der Sitzaufnahme löst und wegschleudert. Mit dem Einsatz eines bekannten mehrstufigen Gasgenerators kann der Druck stufenweise und zeitabhängig, aufgebaut werden, wenn die Stufen des Gasgenerators gleichzeitig oder zeitversetzt in Betrieb genommen werden. Eine andere mögliche Schleudervorrichtung umfasst ein Teleskoprohr mit eingebauten pyrotechnischen Munitionselementen, welches durch die Explosion der Munitionselemente sich blitzartig ausdehnt und eine Kraft auf die der Sitzaufnahme zugewandten Seite des Sitzteils ausübt.

Denkbar ist, dass der Sitz z.B. zwei Arten von Schleudervorrichtungen aufweist, die vom Steuerungssystem je nach benötigter Kraft der Schleudervorrichtung in Betrieb gesetzt werden können.

In einer bevorzugten Ausführungsform ist der Sitzteil an der Sitzaufnahme durch ein Befestigungsmittel befestigt, welches eine Sollbruchstelle aufweist oder welches lösbar ist, wenn die Schleudervorrichtung in Betrieb gesetzt ist. Lösbare Befestigungsmittel sind insbesondere eine Verklipsung oder eine Verrastung. Da sichergestellt werden muss, dass der Sitzteil zusammen mit der Sitzaufnahme einen stabilen Sitz während des Fahrens bilden, wird die Befestigung der Sitzteil mit der Sitzaufnahme lösbar so gestaltet, dass sich der Sitzteil erst mit der von der Schleudervorrichtung ausgeübten Kraft von der Sitzaufnahme löst. Solche Befestigungsmittel z.B. Schrauben mit einer Sollbruchstelle, Verklipsungen oder Verrastungen, sind dem Fachmann bekannt. Selbstverständlich wird die Auskleidung des Sitzes ebenfalls so gestaltet, dass sie die Trennung des Sitzteils von der Sitzaufnahme nicht beeinträchtigt.

Eine vorteilhafte Ausbildung des erfindungsgemässen Airbagsystems sieht vor, dass die Kraft der mindestens eine Schleudervorrichtung vom Steuerungssystem gesteuert wird. Bevorzugt steuert das Steuerungssystem die Kraft der mindestens eine Schleudervorrichtung in Abhängigkeit des Gewichtes des Fahrers.

In einer bevorzugten Ausführungsform weist das Airbagsystem einen zweiten Airbag zur Ergänzung des Schutzes der Hinterseite des Fahrers auf, wobei der zweite Airbag in seinem Ruhezustand vorzugsweise in der, in Fahrtrichtung gesehen, hinteren Hälfte des Sitzteils angeordnet ist. Der zweite Airbag wird ebenfalls vom Steuerungssystem in Betrieb gesetzt und bietet einen zusätzlichen Schutz der Hinterseite des Fahrers, insbesondere bei einer Heckkollision.

In einer bevorzugten Ausführungsform umfasst das Steuerungssystem ein Steuergerät und mindestens einen Sensor zur Erkennung der Kollision. Aufgrund des Erfassungssignals des Sensors setzt das Steuergerät den Gasgenerator und die mindestens eine Schleudervorrichtung bei der Kollision in Betrieb. Als Sensor zur Erkennung der Kollision kann ein bekannter Beschleunigungssensor eingesetzt werden, welcher die Kollision erfasst, insbesondere über die Erfassung von starken negativen Beschleunigungswerten bei der Aufsitzkraftfahrzeugsverzögerung, jenseits von Werten, wie sie alleine durch eine Vollbremsung erreicht werden, die auf eine Kollision hindeuten.

In einer bevorzugten Ausführungsform umfasst das Steuerungssystem zusätzlich einen Sensor, wie beispielsweise einen bekannten Drucksensor, zur Erkennung einer Seitenkollision.

In einer bevorzugten Ausführungsform umfasst das Steuerungssystem weitere Sensoren, vorzugsweise einen Sensor zur Sitzbelegungserkennung, einen Sensor zur Gewichterfassung des Fahrers oder Sensoren zur Ermittlung des Kollisionswinkels, je nach Parametern, die für die Steuerung des Airbagsystems vorgesehen werden.

Vorzugsweise sind die Sensoren zum Teil im Steuergerät eingebaut, zum Teil als Satellitensensoren im Aufsitzkraftfahrzeug verteilt.

Die Stromversorgung des Steuerungssystems erfolgt über die Elektrik des Aufsitzkraftfahrzeugs.

Im Falle der Kollision des Aufsitzkraftfahrzeugs mit einem Hindernis erfasst der Sensor gegebenenfalls zusammen mit den anderen Sensoren die Kollision und geben Erfassungssignale aus, welche vom Steuergerät aufgenommen und analysiert werden. Aufgrund der Erfassungssignale und der anderen Signale entscheidet das Steuergerät, ob und wann der Airbag und die Schleudervorrichtung in Betrieb gesetzt werden, sowie die auf die der Sitzaufnahme zugewandten Seite des Sitzteils von der Schleudervorrichtung ausgeübte Kraft. Die entsprechenden Steuersignale werden vom Steuergerät ausgegeben und dem Gasgenerator und der Schleudervorrichtung übertragen, um sie gegebenenfalls in Betrieb zu setzen.

In einer bevorzugten Ausführungsform kann das Steuergerät den Gasgenerator und die mindestens eine Schleudervorrichtung zeitversetzt oder gleichzeitig bei der Kollision in Betrieb setzen. Bei der Berechnung der Zeitpunkte, an dem der Gasgenerator bzw. die Schleudervorrichtung in Betrieb gesetzt werden, können verschiedene Parameter berücksichtigt werden, insbesondere die Aufsitzkraftfahrzeugverzögerung und den Kollisionswinkel. Die Bedingungen und Ausgangslagen für die Berechnung dieser Zeitpunkte sind nicht auf die nachstehenden Ausführungsformen beschränkt.

Vorzugsweise ist es möglich, den Gasgenerator und die Schleudervorrichtung gleichzeitig in Betrieb zu setzen. Bei einer frontalen Kollision kann es z.B. denkbar sein, gleichzeitig den Fahrer mit dem Airbag zu schützen und vom Aufsitzkraftfahrzeug mit der Schleudervorrichtung wegzuschleudern, dadurch, dass der Airbag und die Schleudervorrichtung gleichzeitig in Betrieb gesetzt werden.

Vorzugsweise ist es ebenfalls möglich, den Gasgenerator und die Schleudervorrichtung zeitversetzt in Betrieb zu setzen. Bei einer Seitenkollision kann es günstiger sein, den Fahrer zuerst mit dem Airbag zu schützen und ihn kurz danach vom Aufsitzkraftfahrzeug mit der Schleudervorrichtung wegzuschleudern, wenn der Ausgangswinkel seiner Flugbahn günstiger ist. Sollte der Airbag die Flugbahn des Fahrers beeinträchtigen, kann es günstiger sein, zuerst die Schleudervorrichtung und kurz danach den Airbag in Betrieb zu setzen.

Denkbar ist ebenfalls, dass die Schleudervorrichtung gar nicht in Betrieb gesetzt wird, sodass der Fahrer nicht zusätzlich gefährdet wird, z.B. mit einer ungünstigen Flugbahn. Dies könnte der Fall beim Rutschen des Aufsitzkraftfahrzeugs sein.

Es ist ebenfalls möglich, den Sitz so auszubilden, dass er zwei hintereinander angeordnete Sitzteile der oben beschriebenen Art und eine Sitzaufnahme umfasst, wobei die in Fahrtrichtung gesehen vordere Sitzaufnahme für den Fahrer und die zweite Sitzaufnahme für den Beifahrer vorgesehen ist. In diesem Fall weist der Sitz mindestens eine Schleudervorrichtung für jeden Sitzteil auf, welche vom Steuerungssystem gesteuert werden.

In einem zweiten Aspekt betrifft die vorliegende Erfindung ein Aufsitzkraftfahrzeug mit einem Fahrzeugkörper und einem Airbagsystem gemäss einer der oben beschriebenen Ausführungsformen. Dabei werden die oben in Zusammenhang mit dem Airbagsystem beschriebenen Vorteile erzielt.

In einem dritten Aspekt betrifft die vorliegende Erfindung ein Verfahren zum Nachrüsten eines einen Fahrzeugkörper aufweisenden Aufsitzkraftfahrzeugs mit einem Airbagsystem gemäss einer der oben beschriebenen bevorzugten Ausführungsformen mit den folgenden Schritten:
- Entfernen des am Fahrzeugkörper befestigten konventionellen Sitzes vom Fahrzeugkörper; und
- Befestigen des Airbagsystems am Fahrzeugkörper indem die Sitzaufnahme am Fahrzeugkörper befestigt und das Steuerungssystem an eine Elektrik des Aufsitzkraftfahrzeugs angeschlossen wird.

Weitere Vorteile und Eigenschaften der Erfindung gehen aus der nachstehenden Beschreibung eines Ausführungsbeispiels hervor, welches anhand der beiliegenden Figuren erläutert wird. Diese zeigen rein schematisch:
- Fig. 1: in skizzierter Form eine Seitenansicht eines Aufsitzkraftfahrzeugs mit einem Fahrer vor einer Kollision;
- Fig. 2: in skizzierter Form eine Seitenansicht des Aufsitzkraftfahrzeugs mit dem Fahrer gemäss Fig. 1 in einem ersten Zustand nach der Kollision;
- Fig. 3: eine vergrösserte Darstellung des eingekreisten Bereichs A der Fig. 2;
- Fig. 4: in skizzierter Form eine Seitenansicht des Aufsitzkraftfahrzeugs mit dem Fahrer gemäss Fig. 1 in einem späteren Zeitpunkt nach dem Zustand der Fig. 2; und
- Fig. 5: einen Querschnitt des Sitzes des Aufsitzkraftfahrzeugs gemäss Fig. 1 in den drei aufeinanderfolgenden Zuständen der Fig. 1, 3 und 4 .

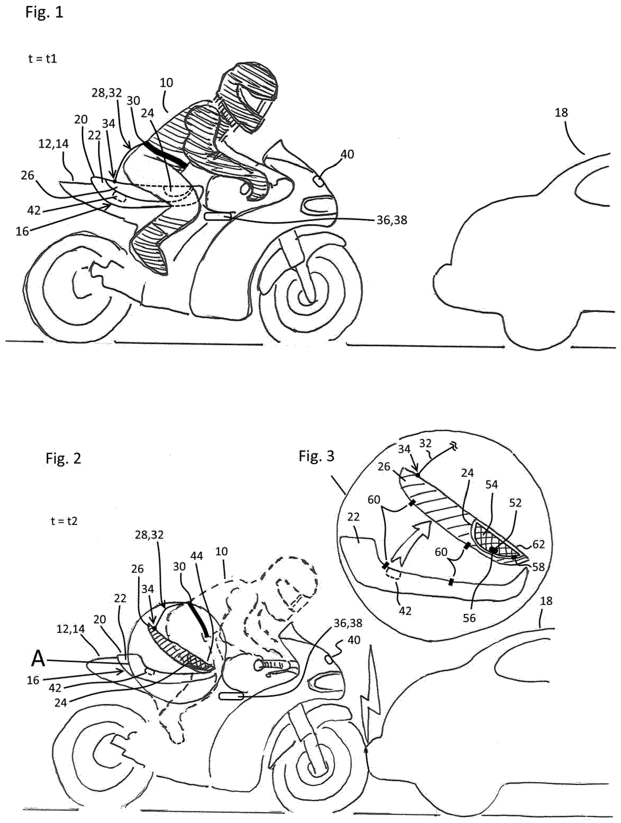

Die Fig. 1 zeigt, in einem Zeitpunkt t1 vor einer Kollision, einen Fahrer 10 auf einem einen Fahrzeugkörper 12 aufweisendes Aufsitzkraftfahrzeug 14, hier ein Motorrad, mit dem erfindungsgemässen Airbagsystem 16, welcher in Richtung eines Hindernisses 18, hier ein Automobil, fährt. Das Airbagsystem 16 umfasst einen Sitz 20 für den Fahrer 10, wobei der Sitz 20 eine am Fahrzeugkörper 12 befestigte Sitzaufnahme 22 und einen an der Sitzaufnahme 22 lösbar befestigten, einen Airbagbehälter 24 umfassenden Sitzteil 26 aufweist.

Der Fahrer 10 ist über ein Anschlussmittel 28 mit dem Sitzteil 26 verbunden, wodurch der Sitzteil 26 eine Hinterseite des Fahrers 10 bei einer Kollision mindestens teilweise abdeckt. Das Anschlussmittel 28 umfasst einen Gurt 30, der vom Fahrer 10 getragen ist, und eine Leine 32, die den Gurt 30 mit dem Sitzteil 26, vorzugsweise in der, in Fahrtrichtung gesehen, hinteren Hälfte des Sitzteils 26 verbindet. Die Leine 32 ist an einem Ende mit dem Gurt 30 verbunden und weist am anderen Ende ein Kupplungsmittel 34 zum Koppeln mit dem Sitzteil 26.

Das Airbagsystem 16 umfasst ebenfalls ein Steuerungssystem 36, welches ein Steuergerät 38 und mindestens einen Sensor 40, welcher als Beschleunigungssensor ausgebildet sein kann, zur Erkennung der Kollision umfasst.

Ferner umfasst das Airbagsystem 16 eine Schleudervorrichtung 42, welche hier als Airbag gestaltet ist und vom Steuerungssystem 36 bei der Kollision in Betrieb gesetzt wird. Sie ist dazu bestimmt, den Sitzteil 26 zusammen mit dem Fahrer 10 von der Sitzaufnahme 22 zu lösen.

Die Funktionsweise des Airbagsystems 16 und des Steuerungssystems 36 wird nachstehend in Zusammenhang mit den folgenden Figuren näher erläutert.

Die Fig. 2 zeigt das Aufsitzkraftfahrzeug 14 gemäss Fig. 1 in einem Zeitpunkt t2 unmittelbar nach der Kollision mit dem Hindernis 18, wobei die Schleudervorrichtung 42 bereits in Betrieb gesetzt wurde.

Bei der Erkennung der Kollision hat der Sensor 40 ein Erfassungssignal ausgegeben, welches vom Steuergerät 38 aufgenommen und analysiert wurde, und aufgrund dessen das Steuergerät 38 die Schleudervorrichtung 42 in Betrieb gesetzt hat.

Durch die in diesem Ausführungsbeispiel unter einer, in Fahrtrichtung gesehen, hinteren Hälfte des Sitzteils 26 angeordnete Schleudervorrichtung 42, wurde der Sitzteil 26 zusammen mit dem Fahrer 10 von der Sitzaufnahme 22 gelöst. Der Sitzteil 26 wird unter dem kombinierten Einfluss der von der Schleudervorrichtung 42 ausgeübten Kraft und der Trägheitskraft in die Höhe geschleudert und schwenkt um seinen vorderen Endbereich 44 nach vorne in Fahrtrichtung gesehen. Dies beeinflusst die Flugbahn des auf dem Sitzteil 26 sitzenden Fahrers 10, die kontrolliert höher verlauft, sodass ein Aufprall des Fahrers 10 mit dem Hindernis 18 vermieden und das Verletzungsrisiko des Fahrers 10 verringert wird.

Da der Fahrer 10 den Gurt 30 um sich geschlossen hat und die Leine 32 mit dem Sitzteil 26 gekoppelt hat, bleibt der Sitzteil 26 in Kontakt mit dem Fahrer 10 beim Sturz, sodass die Hinterseite des Fahrers 10 geschützt wird.

Der in der Fig. 2 eingekreiste Bereich A zeigt in Fig. 3 weitere Merkmale des ebenfalls im Zeitpunkt t2 dargestellten Airbagsystems 16.

Das Airbagsystem 16 umfasst einen im Airbagbehälter 24 angeordneten Airbag 54, welcher, in diesem Ausführungsbeispiel, dauernd mit dem Sitzteil 26 über eine Lasche 58 verbunden ist, die an einem Ende am Airbagbehälter 24 und an dem anderen Ende am Airbag 54 befestigt ist.

Ferner umfasst das Airbagsystem 16 einen an einer Öffnung 56 des Airbags 54 in einem hermetisch abgedichteten Zustand befestigten Gasgenerator 52 zum Erzeugen eines Hochdruckgases zum Aufblasen des Airbags 54. Der Airbagbehälters 24 weist einen Deckel 62 auf, der dazu bestimmt ist, bei einer Entfaltung des Airbags 54 ausgestossen zu werden.

In diesem Ausführungsbeispiel setzt das Steuergerät 38 die Schleudervorrichtung 42 und den Gasgenerator 52 zeitversetzt bei der Kollision in Betrieb.

In diesem Zeitpunkt t2 wurde der Gasgenerator 52 noch nicht in Betrieb gesetzt, um den Airbag 54 aufzublasen. Der Airbag 54 ist noch in einem Ruhezustand zusammen mit dem Gasgenerator 52 im Airbagbehälter 24 angeordnet.

In dieser Ausführungsform ist der Sitzteil 26 durch ein eine Sollbruchstelle aufweisendes Befestigungsmittel 60 an der Sitzaufnahme 22 befestigt. In diesem Zeitpunkt t2 wurde das Befestigungsmittel 60 durch die durch die Schleudervorrichtung 42 ausgeübte Kraft, die auf die der Sitzaufnahme 22 zugewandte Seite des Sitzteils 26 ausgeübt ist, bereits gebrochen.

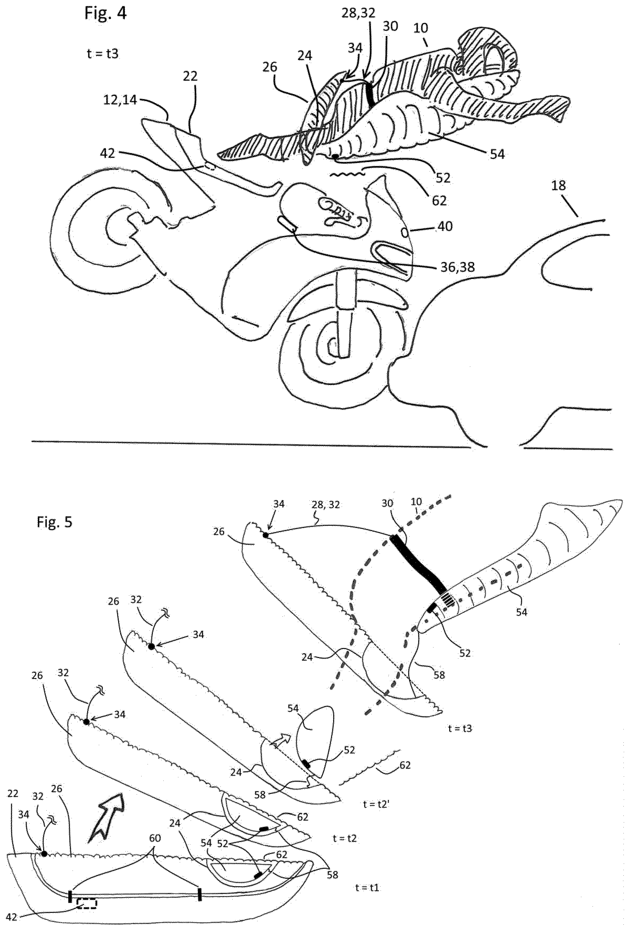

Die Fig. 4 zeigt das Aufsitzkraftfahrzeug 14 gemäss Fig. 1 in einem dem Zeitpunkt t2 folgenden Zeitpunkt t3 nach der Kollision mit dem Hindernis 18, wobei der Gasgenerator 52 vom Steuergerät 38 ebenfalls in Betrieb gesetzt wurde.

Unter dem kombinierten Einfluss der von der Schleudervorrichtung 42 ausgeübten Kraft und der Trägheitskraft verläuft sich die Laufbahn des Fahrers 10 weiter in die Höhe nach vorne in Fahrtrichtung gesehen.

Der Gasgenerator 52 erzeugt ein Hochdruckgas und bläst den Airbag 54 auf. Bei seiner Entfaltung stösst der Airbag 54 den Deckel 62 des Airbagbehälters 24 aus und umhüllt im aufgeblasenen Zustand eine Vorderseite und die Flanken des Fahrers 10 mindestens teilweise und hält am Fahrer 10 beim Sturz, um den Aufprall zu dämpfen. In bekannter Weise kann eine Oberfläche des Airbags 54, welche dem Fahrer 10 gegenüberliegend zu liegen kommt, mit einem Haftmittel versehen werden, um das Anhaften an einer Kleidung des Fahrers 10 zu verbessern.

Da der Airbag 54 dauernd mit dem Sitzteil 26 über die Lasche 58 verbunden ist und der Airbag 54 an der Kleidung des Fahrers 10 anhaftet, bleibt der Sitzteil 26 in Kontakt mit dem Fahrer 10.

Der Fahrer 10 bleibt über das Anschlussmittel 28 an den Sitzteil 26 angeschlossen, sodass der Sitzteil 26 die Hinterseite des Fahrers 10 bei der Kollision mindestens teilweise abdeckt.

In Fig. 5 ist der Zustand des Sitzes 20 zu den Zeiten t1, t2 und t3 in einer einzigen Darstellung gezeigt, wobei der Fahrer 10 nur im Zeitpunkt t3 gestrichelt angedeutet ist.

Für den Zustand im Zeitpunkt t1 wird auf die Beschreibung der Fig. 1 verwiesen, die mit weiteren Informationen nachstehend ergänzt wird.

Im Zeitpunkt t1 vor der Kollision ist der Airbag 54 in einem Ruhezustand im Airbagbehälter 24 angeordnet und am Airbagbehälter 24 befestigt. An der Öffnung 56 des Airbags 54 ist der Gasgenerator 52 in einem hermetisch abgedichteten Zustand befestigt. Der Airbagbehälters 24 weist den Deckel 62 auf, der bei einer Entfaltung des Airbags 54 ausstossbar ist. In diesem Ausführungsbeispiel ist der Airbag 54 dauernd über eine Lasche 58 mit dem Sitzteil 26 verbunden. Der Sitzteil 26 ist durch das eine Sollbruchstelle 72 aufweisende Befestigungsmittel 60 mit der Sitzaufnahme 22 verbunden. In diesem Zeitpunkt wurde das Befestigungsmittel 60 noch nicht gebrochen.

Im Zeitpunkt t2 nach der Kollision mit dem Hindernis 18 wurde die Schleudervorrichtung 42 in Betrieb gesetzt, jedoch noch nicht der Gasgenerator 52, sodass der Airbag 54 noch im Ruhezustand zusammen mit dem Gasgenerator 52 im Airbagbehälter 24 angeordnet ist. Für den Zustand im Zeitpunkt t2 wird auf die Beschreibung der Fig. 2 und 3 verwiesen.

Im Zeitpunkt t2' nach t2 wurde der Gasgenerator 52 in Betrieb gesetzt. Er erzeugt ein Hochdruckgas und bläst den Airbag 54 auf. Bei seiner Entfaltung stösst der Airbag 54 den Deckel 62 des Airbagbehälters 24 aus. Der Airbag 54 bleibt dauernd über die Lasche 58 mit dem Sitzteil 26 verbunden.

Im Zeitpunkt t3 nach t2' wurde der Gasgenerator 52 in Betrieb gesetzt. Für den Zustand im Zeitpunkt t3 wird auf die Beschreibung der Fig. 4 verwiesen.

Selbstverständlich kann das Steuerungssystem 36 die Schleudervorrichtung 42 und den Gasgenerator 52 gleichzeitig auslösen. Ebenfalls ist es möglich die Schleudervorrichtung 42, sowie den Airbag 54 mit dem Einsatz eines mehrstufigen Gasgenerators stufenweise in Betrieb zu setzen.

**Bezugszeichenliste**

| | |
|---|---|
| Fahrer | 10 |
| Fahrzeugkörper | 12 |
| Aufsitzkraftfahrzeug | 14 |
| Airbagsystem | 16 |
| Hindernis | 18 |
| Sitz | 20 |
| Sitzaufnahme | 22 |
| Airbagbehälter | 24 |
| Sitzteil | 26 |
| Anschlussmittel | 28 |
| Gurt | 30 |
| Leine | 32 |
| Kupplungsmittel | 34 |
| Steuerungssystem | 36 |
| Steuergerät | 38 |
| Sensor | 40 |
| Schleudervorrichtung | 42 |
| vorderer Endbereich des Sitzteils | 44 |
| Gasgenerator | 52 |
| Airbag | 54 |
| Öffnung des Airbags | 56 |
| Lasche | 58 |
| Befestigungsmittel | 60 |
| Deckel | 62 |

## Patentansprüche

1. Airbagsystem (16) für ein einen Fahrzeugkörper aufweisendes Aufsitzkraftfahrzeug (14), umfassend einen Sitz (20), einen Airbag (54), welcher in seinem Ruhezustand in einem Airbagbehälter (24) angeordnet ist, einen Gasgenerator (52) zum Erzeugen eines Hochdruckgases zum Aufblasen des Airbags (54), und ein Steuerungssystem (36), welches im Falle einer Kollision des Aufsitzkraftfahrzeugs (14) mit einem Hindernis (18) den Gasgenerator (52) in Betrieb setzt, um den Airbag (54) aufzublasen, wobei der Airbag (54) im aufgeblasenen Zustand dazu bestimmt ist, eine Vorderseite und die Flanken eines Fahrers (10) mindestens teilweise zu umhüllen und am Fahrer (10) bei einem Sturz zu halten, um den Aufprall zu dämpfen,
**dadurch gekennzeichnet, dass**
der Sitz (20) eine Sitzaufnahme (22), die dazu bestimmt ist, am Fahrzeugkörper befestigt zu sein, einen an der Sitzaufnahme (22) lösbar befestigten, den Airbagbehälter (24) umfassenden Sitzteil (26) und mindestens eine Schleudervorrichtung (42), welche vom Steuerungssystem (36) bei der Kollision in Betrieb gesetzt wird und dazu bestimmt ist, den Sitzteil (26) zusammen mit dem Fahrer (10) von der Sitzaufnahme (22) zu lösen, aufweist.

2. Airbagsystem (16) nach Anspruch 1, **dadurch gekennzeichnet, dass** der Airbag (54) dauernd mit dem Sitzteil (26) verbunden ist.

3. Airbagsystem (16) nach Anspruch 1 oder 2, **gekennzeichnet, durch** ein Anschlussmittel (28), insbesondere einen Gurt (30), das dazu bestimmt ist, den Fahrer (10) und den Sitzteil (26) miteinander zu verbinden, wodurch der Sitzteil (26) bei der Kollision eine Hinterseite des Fahrers (10) mindestens teilweise abdeckt.

4. Airbagsystem (16) nach einem der Ansprüche 1 bis 3, **dadurch gekennzeichnet, dass** die mindestens eine Schleudervorrichtung (42) unter dem Sitzteil (26), vorzugsweise unter einem mittleren Bereich des Sitzteils (26) angeordnet ist.

5. Airbagsystem (16) nach einem der Ansprüche 1 bis 4, **dadurch gekennzeichnet, dass** die mindestens eine Schleudervorrichtung (42) an der Sitzaufnahme (22) befestigt ist.

6. Airbagsystem (16) nach einem der Ansprüche 1 bis 5, **dadurch gekennzeichnet, dass** der Sitzteil (26) an der Sitzaufnahme (22) durch ein Befestigungsmittel (60) befestigt ist, welches eine Sollbruchstelle aufweist oder welches lösbar ist, wenn die mindestens eine Schleudervorrichtung (42) in Betrieb gesetzt ist.

7. Airbagsystem (16) nach einem der Ansprüche 1 bis 6, **dadurch gekennzeichnet, dass** die Kraft der mindestens eine Schleudervorrichtung (42) vom Steuerungssystem (36) gesteuert wird.

8. Airbagsystem (16) nach Anspruch 7, **dadurch gekennzeichnet, dass** das Steuerungssystem (36) die Kraft der mindestens eine Schleudervorrichtung (42) in Abhängigkeit des Gewichtes des Fahrers (10) steuert.

9. Airbagsystem (16) nach einem der Ansprüche 1 bis 8, **dadurch gekennzeichnet, dass** das Airbagsystem (16) einen zweiten Airbag zur Ergänzung des Schutzes der Hinterseite des Fahrers (10) aufweist, wobei der zweite Airbag in seinem Ruhezustand vorzugsweise in, in Fahrtrichtung gesehen, der hinteren Hälfte des Sitzteils (26) angeordnet ist.

10. Airbagsystem (16) nach einem der Ansprüche 1 bis 9, **dadurch gekennzeichnet, dass** das Steuerungssystem (36) ein Steuergerät (38) und einen Sensor (40) zur Erkennung der Kollision, insbesondere einen Beschleunigungssensor, umfasst, aufgrund dessen Erfassungssignal das Steuergerät (38) den Gasgenerator (52) und die mindestens eine Schleudervorrichtung (42) bei der Kollision in Betrieb setzt.

11. Airbagsystem (16) nach Anspruch 10, **dadurch gekennzeichnet, dass** das Steuergerät (38) den Gasgenerator (52) und die mindestens eine Schleudervorrichtung (42) zeitversetzt oder gleichzeitig in Betrieb setzt.

12. Aufsitzkraftfahrzeug mit einem Fahrzeugkörper und einem Airbagsystem (16) nach einem der Ansprüche 1 bis 11.

13. Verfahren zum Nachrüsten eines einen Fahrzeugkörper aufweisenden Aufsitzkraftfahrzeugs (10) mit einem Airbagsystem (16) nach einem der Ansprüche 1 bis 11, mit den folgenden Schritten:
- Entfernen des am Fahrzeugkörper befestigten konventionellen Sitzes vom Fahrzeugkörper; und
- Befestigen des Airbagsystems (16) am Fahrzeugkörper indem die Sitzaufnahme (22) am Fahrzeugkörper befestigt und das Steuerungssystem (36) an eine Elektrik des Aufsitzkraftfahrzeugs (14) angeschlossen wird.

## Claims

1. Airbag system (16) for a ride-on motor vehicle (14) having a vehicle body, comprising a seat (20), an airbag (54) which, in its inoperative state, is arranged in an airbag container (24), a gas generator (52) for generating a high-pressure gas for inflating the airbag (54), and a control system (36) which, in the event of a collision of the ride-on motor vehicle (14) with an obstacle (18), sets the gas generator (52) into operation in order to inflate the airbag (54), wherein the airbag (54) in the inflated state is intended to at least partially envelop a front side and the flanks of a rider (10) and to hold against the rider (10) in the event of a fall, in order to damp the impact,
**characterized in that**
the seat (20) has a seat mount (22) which is intended to be fastened to the vehicle body, a seat part (26) which is fastened releasably to the seat mount (22) and comprises the airbag container (24), and at least one catapulting device (42) which is set into operation by the control system (36) during the collision and is intended to release the seat part (26) together with the rider (10) from the seat mount (22).

2. Airbag system (16) according to Claim 1, **characterized in that** the airbag (54) is permanently connected to the seat part (26).

3. Airbag system (16) according to Claim 1 or 2, **characterized by** a connection means (28), in particular a strap (30), which is intended to connect the rider (10) and the seat part (26) to each other, as a result of which the seat part (26) at least partially covers a rear side of the rider (10) during the collision.

4. Airbag system (16) according to one of Claims 1 to 3, **characterized in that** the at least one catapulting device (42) is arranged under the seat part (26), preferably under a central region of the seat part (26).

5. Airbag system (16) according to one of Claims 1 to 4, **characterized in that** the at least one catapulting device (42) is fastened to the seat mount (22) .

6. Airbag system (16) according to one of Claims 1 to 5, **characterized in that** the seat part (26) is fastened to the seat mount (22) by a fastening means (60) which has a predetermined breaking point or which is releasable when the at least one catapulting device (42) is set into operation.

7. Airbag system (16) according to one of Claims 1 to 6, **characterized in that** the force of the at least one catapulting device (42) is controlled by the control system (36).

8. Airbag system (16) according to Claim 7, **characterized in that** the control system (36) controls the force of the at least one catapulting device (42) as a function of the weight of the rider (10).

9. Airbag system (16) according to one of Claims 1 to 8, **characterized in that** the airbag system (16) has a second airbag for supplementing the protection of the rear side of the rider (10), wherein the second airbag in its inoperative state is preferably arranged in the rear half of the seat part (26), as seen in the direction of travel.

10. Airbag system (16) according to one of Claims 1 to 9, **characterized in that** the control system (36) comprises a control device (38) and a sensor (40) for identifying the collision, in particular an acceleration sensor, owing to the sensing signal of which the control device (38) sets the gas generator (52) and the at least one catapulting device (42) into operation during the collision.

11. Airbag system (16) according to Claim 10, **characterized in that** the control device (38) sets the gas generator (52) and the at least one catapulting device (42) into operation with a delay or simultaneously.

12. Ride-on motor vehicle with a vehicle body and an airbag system (16) according to one of Claims 1 to 11.

13. Method for retrofitting a ride-on motor vehicle (10) having a vehicle body, with an airbag system (16) according to one of Claims 1 to 11, having the following steps:
- removing the conventional seat, which is fastened to the vehicle body, from the vehicle body ; and
- fastening the airbag system (16) to the vehicle body by the seat mount (22) being fastened to the vehicle body and the control system (36) being connected to an electrical system of the ride-on motor vehicle (14).

## Revendications

1. Système de coussin gonflable de sécurité (16) pour un véhicule automobile à conducteur porté (14) comprenant un corps de véhicule, comportant un siège (20), un coussin gonflable de sécurité (54), lequel est disposé dans un contenant de coussin gonflable de sécurité (24) dans son état de repos, un générateur de gaz (52) servant à produire un gaz haute pression pour gonfler le coussin gonflable de sécurité (54), et un système de commande (36), lequel met en service le générateur de gaz (52) en cas de collision du véhicule automobile à conducteur porté (14) avec un obstacle (18), afin de gonfler le coussin gonflable de sécurité (54), le coussin gonflable de sécurité (54) étant conçu pour, à l'état gonflé, envelopper au moins partiellement un côté avant et les flancs d'un conducteur (10) et rester près du conducteur (10) en cas de chute, afin d'amortir le choc,
**caractérisé en ce que**
le siège (20) comprend un logement de siège (22) qui est destiné à être fixé au corps de véhicule, une partie d'assise (26) comprenant le contenant de coussin gonflable de sécurité (24) et fixée de manière amovible au logement de siège (22), et au moins un dispositif de projection (42), lequel est mis en service par le système de commande (36) lors de la collision et est destiné à détacher la partie d'assise (26), conjointement avec le conducteur (10), du logement de siège (22).

2. Système de coussin gonflable de sécurité (16) selon la revendication 1, **caractérisé en ce que** le coussin gonflable de sécurité (54) est relié de manière permanente à la partie d'assise (26).

3. Système de coussin gonflable de sécurité (16) selon la revendication 1 ou 2, **caractérisé par** un moyen de raccordement (28), en particulier une ceinture (30), qui est destiné à relier le conducteur (10) et la partie d'assise (26) l'un à l'autre, de sorte que la partie d'assise (26) recouvre au moins partiellement, lors de la collision, un côté arrière du conducteur (10).

4. Système de coussin gonflable de sécurité (16) selon l'une des revendications 1 à 3, **caractérisé en ce que** ledit au moins un dispositif de projection (42) est disposé en dessous de la partie d'assise (26), de préférence en dessous d'une région centrale de la partie d'assise (26).

5. Système de coussin gonflable de sécurité (16) selon l'une des revendications 1 à 4, **caractérisé en ce que** ledit au moins un dispositif de projection (42) est fixé au logement de siège (22).

6. Système de coussin gonflable de sécurité (16) selon l'une des revendications 1 bis 5, **caractérisé en ce que** la partie d'assise (26) est fixée au logement de siège (22) par le biais d'un moyen de fixation (60), lequel comprend un point de rupture imposée ou lequel est détachable lorsque ledit au moins un dispositif de projection (42) est mis en service.

7. Système de coussin gonflable de sécurité (16) selon l'une des revendications 1 à 6, **caractérisé en ce que** la force dudit au moins un dispositif de projection (42) est commandée par le système de commande (36).

8. Système de coussin gonflable de sécurité (16) selon la revendication 7, **caractérisé en ce que** le système de commande (36) commande la force dudit au moins un dispositif de projection (42) en fonction du poids du conducteur (10).

9. Système de coussin gonflable de sécurité (16) selon l'une des revendications 1 à 8, **caractérisé en ce que** le système de coussin gonflable de sécurité (16) comprend un deuxième coussin gonflable de sécurité pour compléter la protection du côté arrière du conducteur (10), le deuxième coussin gonflable de sécurité étant, dans son état de repos, disposé de préférence dans la moitié arrière, vue dans la direction de conduite, de la partie d'assise (26).

10. Système de coussin gonflable de sécurité (16) selon l'une des revendications 1 à 9, **caractérisé en ce que** le système de commande (36) comporte un appareil de commande (38) et un capteur (40) pour la détection de la collision, en particulier un capteur d'accélération sur la base du signal de détection duquel l'appareil de commande (38) met en service le générateur de gaz (52) et ledit au moins un dispositif de projection (42) lors de la collision.

11. Système de coussin gonflable de sécurité (16) selon la revendication 10, **caractérisé en ce que** l'appareil de commande (38) met en service le générateur de gaz (52) et ledit au moins un dispositif de projection (42) de manière décalée dans le temps ou simultanément.

12. Véhicule automobile à conducteur porté comprenant un corps de véhicule et un système de coussin gonflable de sécurité (16) selon l'une des revendications 1 à 11.

13. Procédé de post-équipement d'un véhicule automobile à conducteur porté (10) comprenant un corps de véhicule et doté d'un système de coussin gonflable de sécurité (16) selon l'une des revendications 1 à 11, comprenant les étapes suivantes :
- enlever du corps de véhicule le siège traditionnel fixé au corps de véhicule ; et
- fixer le système de coussin gonflable de sécurité (16) au corps de véhicule par le fait que le logement de siège (22) est fixé au corps de véhicule et que le système de commande (36) est connecté à un système électrique du véhicule automobile à conducteur porté (14).
